# EUROPEAN PATENT APPLICATION

(11) **EP 3 937 025 A1**
(43) Date of publication of application: **12.01.2022**
(21) Application number: 21178654.6
(22) Date of filing: 09.06.2021
(51) Int. Cl.: G06F 16/21

(54) **DATA REVIEW AND VALIDATION**

(30) Priority: 09.07.2020 DE 102020208651
(71) Applicant: VOLKSWAGEN AG, 38440 Wolfsburg (DE)
(72) Inventor: Dondapati, Chaitanya Kumar, 85640 Putzbrunn (DE)

(57) **Abstract**

According to a method for data review and validation an input dataset comprising tables (T1) is received by a computing system (1). Each table (T1) corresponds to an entity and comprises fields (F11) and entries, each entry comprising values for the fields (F11) of the respective table (T1). A field dictionary is received by the computing system (1), wherein the field dictionary comprises a field dictionary entry, associating a semantic meaning with a first field of a table (T1). A first statement is generated by the computing system (1) based on the field dictionary entry and the statement is output via a user interface (3a, 3b). A user input is received by the computing system (1) in response to the output statement and the field dictionary entry is modified by the computing system (1) depending on the user input.

## Description

The present invention relates to a method for data review and validation, to a computer program and to a computer-readable storage medium.

In the field of data analysis, it is a goal to obtain useful information from a specific set of input data. Depending on the actual project, the type and structure of the underlying input data may vary greatly. Therefore, a person trying to analyze the input data by means of software tools usually has to spend great amounts of time and effort to understand the meaning and the structure of the input data.

Document US 9,569,416 B1 describes a method to annotate data, in particular to annotate fields associated with a graphical user interface and data objects.

It is therefore an object of the present invention to provide an improved concept for data review and validation, which allows for a higher degree of automation of tasks necessary for understanding an input dataset.

This object is achieved by the subject-matter of the independent claims. Further implementations and preferred embodiments are the subject-matter of dependent claims.

The improved concept is based on the idea to generate a statement based on an entry of a field dictionary associating a semantic meaning with a field of a table comprised by the input data. The field dictionary entry is modified depending on a user input received in response the statement.

According to the improved concept, a method for data review and validation, in particular a computer-implemented method for data review and validation, is provided. An input dataset comprising one or more tables is received by a computing system, wherein each table of the one or more tables corresponds to a corresponding entity and comprises one or more fields. Each table comprises one or more entries, each entry comprising respective values for each of the one or more fields of the respective table or each entry consists of the respective values for each of the one or more fields of the respective table. A field dictionary dataset is received by the computing system, wherein the field dictionary dataset comprises a first field dictionary entry, associating a first semantic meaning with a first field of the one or more fields of a first table of the one or more tables. A first statement is generated by the computing system based on the first field dictionary entry, in particular based on the first semantic meaning, and the first statement is output, in particular by the computing system, via a user interface. A first user input is received by the computing system, in particular via the user interface, in response to the output first statement. The first field dictionary entry is modified by the computing system depending on the first user input.

Here and in the following, a table may be understood as a set of related data provided in a table format, for example within a database. For example, the table may consist of columns and rows. For example, the table may be implemented as a table according to a database language, for example as an SQL-table.

The fields of a table may also be denoted as the columns and rows of the table. In the case of SQL, the fields may correspond to columns. In case the fields correspond to columns of the table, each entry of the table consists of respective values for each of the columns, in other words, each entry may correspond to a row of the table. However, other structures are also possible.

Here and in the following, receiving data or receiving a dataset may, for example, be understood as receiving the respective data or dataset via an interface and/or from a storage device. In particular, the first statement may contain the first semantic meaning in a human readable form. Consequently, a user may study the output first statement and provide the first user input via the user interface in response to the first statement. In particular, the first user input may comprise a confirmation or validation of the first field dictionary or a correction information to modify or correct the first field dictionary entry. The modification of the first field dictionary entry may, in particular, comprise a modification of the first semantic meaning. The modified first semantic meaning or the modified field dictionary entry may then be stored.

Therefore, by means of a method according to the improved concept, the user may be automatically guided to comment on the first statement in order to improve the first semantic meaning. In the same way, further field dictionary entries may be reviewed and validated or modified depending on respective user inputs. The process may also be iterated by including different users in order to achieve a validated field dictionary dataset automatically. In this way, the input data may be understood by a data analyst by systematically modifying or validating the respective field dictionary entries. The validated field dictionary dataset may be considered as one result of the method according to the improved concept. The validated field dictionary dataset may then be used for an efficient analysis of the input dataset.

According to several implementations of the method, the one or more tables comprise a second table. The input dataset comprises an interrelation information, which associates the first field with the second table. The statement is generated depending on the interrelation information and/or the first field dictionary entry is modified depending on the interrelation information.

The different entities corresponding to the first and the second table may not be completely independent of each other. Rather, the respective entities may be related to each other, which is represented by the interrelation information.

By generating the statement depending on the interrelation information or modifying the entry depending on the interrelation information, a particularly efficient and meaningful modification of the field dictionary dataset, and, in particular, the first field dictionary entry may be achieved.

According to several implementations, the interrelation information associates the first field with a second field of the one or more fields of the second table. In particular, the field dictionary dataset comprises a second field dictionary entry associating a second semantic meaning to the second field.

In such implementations, the statement may be generated and/or the first field dictionary entry may be modified depending on the second semantic meaning. In this way, a faster convergence of the first field dictionary entry and, in general, the field dictionary dataset, to obtain the validated field dictionary dataset may be achieved. In other words, less iterations may be necessary in order to obtain a validation of the first field dictionary entry.

According to several implementations, a second statement is generated by the computing system based on the modified first field dictionary entry and the second statement is output, in particular by the computing system, via the user interface. A second user input is received by the computing system, in particular via the input interface, in response to the output second statement and the modified first field dictionary entry is modified again by the computing system depending on the second user input.

In particular, the first and the second user input may be entered by different users. The user interface may, for example, be understood as a software interface to access a respective database or the computing system, respectively. In particular, the user interface may be coupled to different input-output devices operable by different users. In this way, the semantic meaning may be iteratively reviewed by different users and the quality of the field dictionary dataset may be further improved.

According to several implementations, the steps of generating and outputting the first statement, receiving first user input and modifying the field dictionary entry are iteratively repeated. A validation user input is received by the computing system and the iterative repetition is stopped depending on the validation user input.

In other words, said steps are repeated until the repeatedly modified first field dictionary entry is validated by a user. In this way, the accuracy of the field dictionary entry and the field dictionary dataset, respectively, is improved.

According to several implementations, the validated field dictionary dataset is generated by the computing system depending on the modified first field dictionary entry, in particular depending on the repeatedly modified first field dictionary entry after the validation user input is received.

According to several implementations, the field dictionary dataset comprises a plurality of field dictionary entries including the field dictionary entry, wherein a respective semantic meaning is associated to each of the one or more field of the first table by the plurality of the field dictionary entries. The first statement is generated based on each of the plurality of field dictionary entries and each of the plurality of field dictionary entries is modified by the computing system depending on the first user input.

In this way, the whole field dictionary dataset may be iteratively modified and improved as described above.

According to several implementations, a table dictionary dataset is received by the computing system, wherein the table dictionary dataset comprises a table dictionary entry, associating a further semantic meaning with the entity corresponding to one of the one or more tables. A further statement is generated by the computing system based on the table dictionary entry, in particular based on the further semantic meaning, and the further statement is output, in particular by the computing system, via the user interface. A further input is received by the computing system, in particular via the user interface, in response to the output further statement and the table dictionary entry is modified by the computing system depending on the further user input.

In such implementations, not only the field dictionary dataset is improved based on the user's inputs but also the table dictionary dataset.

The explanations with respect to the field dictionary dataset may be carried over analogously to the table dictionary dataset.

According to the improved concept, also a computer program comprising instructions is provided. When the instructions or the computer program, respectively, are executed by a computing system, the instructions cause the computing system to carrying out a method according to the improved concept.

Therein, the computing system executing the instructions or the computer program may, for example, correspond to the computing system mentioned with respect to the various implementations of the method according to the improved concept.

According to the improved concept, also a computer-readable storage medium storing a computer program according to the improved concept is provided.

The invention also comprises combinations of features of the described implementations.

In the following, exemplary implementations of the improved concept are described with respect to the drawings. Therein,
- Fig. 1: shows schematically a computing system for carrying out an exemplary implementation of a method according to the improved concept.
- Fig. 2: shows a flow diagram of a further exemplary implementation of a method according to the improved concept; and
- Fig. 3: shows an entity-relationship diagram according to a further exemplary implementation of a method according to the improved concept.

The exemplary implementations described in the following represent preferred embodiments of the inventions. In the embodiment, the described components represent individual and independent features of the invention, respectively, which may characterize the invention independent of each other and, consequently, are to be considered as part of the invention also in combinations deviating from the described combinations. Furthermore, the described implementations are extendable by means of further features described above.

In the drawings, identical or functionally identical elements may be denoted by the same reference signs. The description of identical or functionally identical elements is not necessarily repeated with respect to different figures.

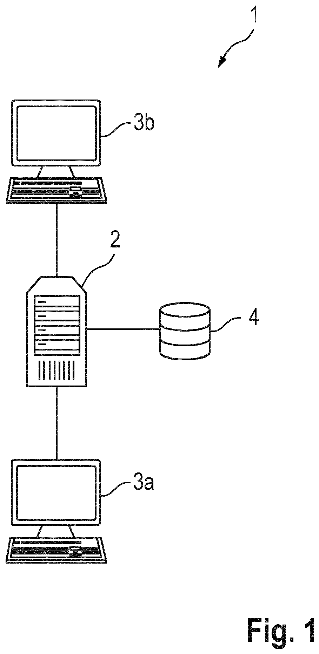

Fig. 1 shows a computing system 1, which may be used to carry out a method according to the improved concept for data review and validation. The computing system 1 may for example comprise a backend computing unit 2 and a storage unit 4 storing a database with an input dataset. Furthermore, the storage unit 4 may store an initial field dictionary dataset and an initial table dictionary dataset.

Fig. 1 also shows input-output-devices 3a, 3b, coupled to the backend computing unit 2 to receive user inputs by respective users.

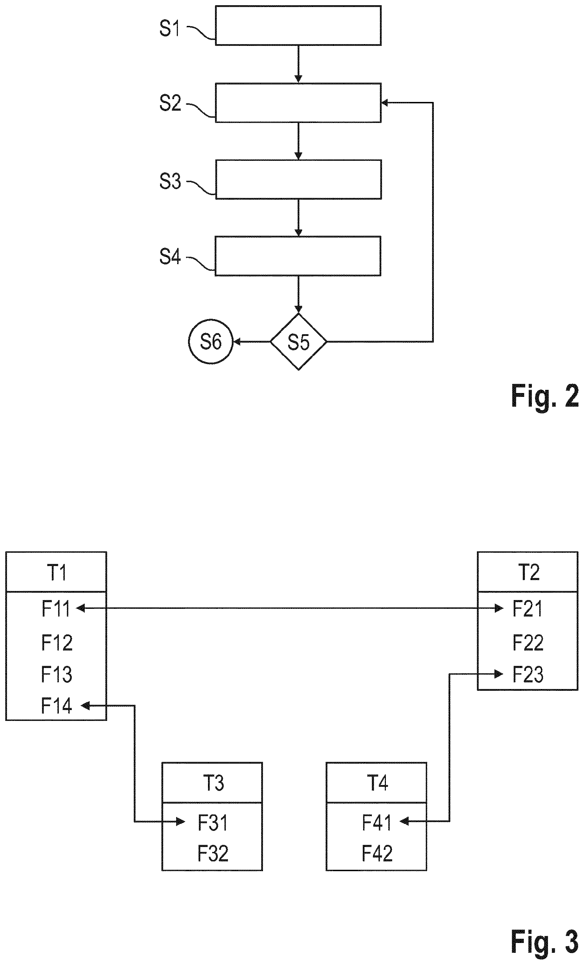

Fig. 2 shows a schematic flow diagram of an exemplary implementation of a method for data review and validation according to the improved concept. The method may, for example, be carried out by means of a computing system 1 as shown in Fig. 1.

In method step S1, the input dataset and the initial field dictionary dataset as well as the initial table dictionary dataset may be received by the computing system 1, for example by the backend computing unit 2 from the storage unit 4. The input dataset comprises one or more tables. In a non-limiting illustrative example, the input dataset may comprise four tables T1, T2, T3, T4. Each of the tables T1, T2, T3, T4 corresponds to a respective entity and comprises one or more fields.

In step S1, the computing system 1 may optionally set up a corresponding entity relationship diagram based on the input dataset, as indicated in Fig. 3. In the example of Fig. 3, the first table T1 may comprise four fields or columns F11, F12, F13, F14. The second table T2 may comprise three fields or columns F21, F22, F23. The third table T3 may comprise two fields or columns F31, F32 and the fourth table T4 may comprise two fields or columns F41, F42. In the example of Fig. 3, the first field F11 of the first table T1 is related to the first field F21 of the second table T2. Furthermore, the fourth field F14 of the first table T1 is related to the first field F31 of the third table T3. Furthermore, the third field F23 of the second table T2 is related to the first field F41 of the fourth table T4. The input dataset may comprise one or more entries or rows for each of the tables T1, T2, T3, T4, wherein each entry comprises a respective value for each of the fields F11 to F42 of the respective table T1, T2, T3, T4.

The actual content and meaning of the fields F11 - F42 depend on the actual project under consideration. As an illustrating and non-limiting example, the first table T1 may correspond an entity "Employee", the second table T2 may correspond an entity "Department", the third table T3 may correspond to an entity "Country" and the fourth table T4 may correspond to an entity "Location".

In this example, the fields F11 - F42 of the tables T1, T2, T3, T4 may for example be defined as follows:
T1 = Employee
   F11 = Department Number
   F12 = Name
   F13 = Salary
   F14 = Nationality ID
T2 = Department
   F21 = Number
   F22 = Name
   F23 = Location ID
T3 = Country
   F31 = ID
   F32 = Name
T4 = Location
   F41 = Location ID
   F42 = Name

In this example, the field F11 "Department Number" of the table T1 "Employee" is associated with the field F21 "Number" of the table T2 "Department". The field F14 "Nationality ID" of the first table T1 "Employee" is associated with the field F31 "ID" of the third table T3 "Country" and the third field F23 "Location ID" of the second table T2 "Department" is associated with the field F41 "Location ID" of the fourth table T4 "Location".

The initial table dictionary dataset may, for example, associate a respective semantic meaning to each of the tables T1, T2, T3, T4, for example according to the described illustrative example:

| Table Name | Semantic Meaning |
|---|---|
| Employee | Information about employees |
| Department | Information about departments |
| Location | Information about locations |
| Country | Information about countries |

The initial field dictionary dataset may, for example, associate a respective semantic meaning to at least some of the fields F11 - F42, for example according to the described illustrative example:

| Field Name | Semantic Meaning |
|---|---|
| ID | Depends on the table: ID of the employee, department, country or location |
| Name | Depends on the table: Last Name of the Employee, Name of the department, country or location |
| Salary | Salary of the employee when the employee joined the company |

In step S2 of the method, a first statement is generated by the computing system 1 based on one or more entries of the field dictionary dataset. For example, the statement may express the one or more semantic meanings associated by respective fields by the field dictionary dataset. For example, the algorithm may begin with a table comprising field corresponding a metric or measure. In case of the illustrative example, this may be the and therefore the starting table may be the first table T1.

The statement may for example express that the first table T1 "Employee" is a table, which consists of an ID of an employee, an ID of his or her department, his or her current salary and his or her nationality ID.

In step S3, the statement may be output by means of the backend computing unit 2 via the first input-output-device 3a to a user. The user may enter a user input in step S4, and the backend computing unit 2 may determine in step S5, whether the user input corresponds to a correction of the statement or to a validation of the statement. In case the statement is validated, the method may for example end in step S6. In case the statement is corrected, for example, by pointing out that salary does not correspond to the current salary of the employee but to the salary of the employee when he or she has joined the company. In this case, the field dictionary dataset, in the present example the semantic meaning of field F13 of the first table T1, may be modified accordingly.

The described steps may be repeated iteratively also with involving different users to achieve a validated field dictionary dataset. Analogously, also a validated table dictionary dataset may be generated.

As described, the improved concept allows for an automated review and validation of field and table dictionaries to obtain an understanding of the structure and meaning of project-dependent input data in a particularly fast and reliable manner.

### Reference signs

- 1: computing system
- 2: backend computing unit
- 3a, 3b: input/output devices
- 4: storage unit
- T1, T2, T3, T4: tables
- F11, F12, F13, F42: fields
- F21, F22, F23: fields
- F31, F32: fields
- F41, F42: fields
- S1 to S6: method steps

## Claims

1. Method for data review and validation, wherein
- an input dataset comprising one or more tables (T1, T2, T3, T4) is received by a computing system (1), wherein each table (T1, T2, T3, T4)
- corresponds to a respective entity and comprises one or more fields (F11, F12, F13, F14, F21, F22, F23, F31, F32, F41, F42); and
- comprises one or more entries, each entry comprising respective values for each of the one or more fields (F11, F12, F13, F14, F21, F22, F23, F31, F32, F41, F42) of the respective table (T1, T2, T3, T4);
- a field dictionary dataset is received by the computing system (1), wherein the field dictionary dataset comprises a first field dictionary entry, associating a first semantic meaning with a first field of the one or more fields (F11, F12, F13, F14, F21, F22, F23, F31, F32, F41, F42) of a first table (T1) of the one or more tables (T1, T2, T3, T4);
- a first statement is generated by the computing system (1) based on the first field dictionary entry and the first statement is output via a user interface (3a, 3b);
- a first user input is received by the computing system (1) in response to the output first statement; and
- the first field dictionary entry is modified by the computing system (1) depending on the first user input.

2. Method according to claim 1, wherein
- the one or more tables (T1, T2, T3, T4) comprise a second table (T2);
- the input dataset comprises an interrelation information, which associates the first field with the second table (T2); and
- the statement is generated depending on the interrelation information and/or the first field dictionary entry is modified depending on the interrelation information.

3. Method according to claim 2, wherein the interrelation information associates the first field with a second field of the one or more fields (F11, F12, F13, F14, F21, F22, F23, F31, F32, F41, F42) of the second table (T2).

4. Method according to one of the preceding claims, wherein
- a second statement is generated by the computing system (1) based on the modified first field dictionary entry and the second statement is output via the user interface (3a, 3b);
- a second user input is received by the computing system (1) in response to the output second statement; and
- the modified first field dictionary entry is modified again by the computing system (1) depending on the second user input.

5. Method according to one of claims 1 to 3, wherein
- the steps of generating and outputting the first statement, receiving the first user input and modifying the first field dictionary entry are iteratively repeated;
- a validation user input is received by the computing system (1); and
- the iterative repetition is stopped depending on the validation user input.

6. Method according to one of the preceding claims, wherein a validated field dictionary dataset is generated by the computing system (1) depending on the modified first field dictionary entry.

7. Method according to one of the preceding claims, wherein
- the field dictionary dataset comprises a plurality of field dictionary entries including the first field dictionary entry, wherein a respective semantic meaning is associated to each of the one or more fields (F11, F12, F13, F14, F21, F22, F23, F31, F32, F41, F42) of the first table (T1) by the plurality of field dictionary entries;
- the first statement is generated based on each of the plurality of field dictionary entries;
- each of the plurality of field dictionary entries is modified by the computing system (1) depending on the first user input.

8. Method according to one of the preceding claims, wherein
- a table dictionary dataset is received by the computing system (1), wherein the table dictionary dataset comprises a table dictionary entry, associating a further semantic meaning with the entity corresponding to one of the one or more tables (T1, T2, T3, T4);
- a further statement is generated by the computing system (1) based on the table dictionary entry and the further statement is output via the user interface;
- a further user input is received by the computing system (1) in response to the output further statement; and
- the table dictionary entry is modified by the computing system (1) depending on the further user input.

9. Computer program comprising instructions, which, when executed by a computing system (1), cause the computing system (1) to carry out a method according to one of the preceding claims.

10. Computer readable storage medium storing a computer program according to claim 9.
